(19) Europäisches Patentamt
European Patent Office
Office européen des brevets

(11) **EP 4 070 511 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **20817300.5**

(22) Anmeldetag: **01.12.2020**

(51) Internationale Patentklassifikation (IPC):
**H04L 12/40** $^{(2006.01)}$

(52) Gemeinsame Patentklassifikation (CPC):
**H04L 12/40013**

(86) Internationale Anmeldenummer:
**PCT/EP2020/084122**

(87) Internationale Veröffentlichungsnummer:
**WO 2021/110675 (10.06.2021 Gazette 2021/23)**

(54) **TEILNEHMERSTATION FÜR EIN SERIELLES BUSSYSTEM UND VERFAHREN ZUR KOMMUNIKATION IN EINEM SERIELLEN BUSSYSTEM**

SUBSCRIBER STATION FOR A SERIAL BUS SYSTEM AND METHOD FOR COMMUNICATION IN A SERIAL BUS SYSTEM

STATION D'ABONNÉ POUR UN SYSTÈME DE BUS SÉRIE ET PROCÉDÉ DE COMMUNICATION DANS UN SYSTÈME DE BUS SÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2019 DE 102019218715**

(43) Veröffentlichungstag der Anmeldung:
**12.10.2022 Patentblatt 2022/41**

(73) Patentinhaber: **Robert Bosch GmbH
70442 Stuttgart (DE)**

(72) Erfinder:
• **HARTWICH, Florian
72762 Reutlingen (DE)**
• **SENGER, Christian
70569 Stuttgart (DE)**
• **HORST, Christian
72144 Dusslingen (DE)**
• **MUTTER, Arthur
73765 Neuhausen (DE)**

(56) Entgegenhaltungen:
WO-A1-2013/000916     WO-A1-2019/030214
DE-A1-102013 020 522     DE-A1-102015 209 201

**Beschreibung**

Technisches Gebiet

Die vorliegende Erfindung betrifft eine Teilnehmerstation für ein serielles Bussystem und ein Verfahren zur Kommunikation in einem seriellen Bussystem, das mit hoher Datenrate sowie großer Flexibilität und großer Fehlerrobustheit arbeitet.

Stand der Technik

Bussysteme für die Kommunikation zwischen Sensoren und Steuergeräten, beispielsweise in Fahrzeugen, sollen je nach der Anzahl an Funktionen einer technischen Anlage bzw. eines Fahrzeugs, die Übertragung einer großen Datenmenge ermöglichen. Dabei wird oft gefordert, dass die Daten schneller vom Sender zum Empfänger zu übertragen sind als bisher und bei Bedarf auch große Datenpakete übertragbar sind.

Bei Fahrzeugen ist derzeit ein Bussystem in der Einführungsphase, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen. CAN FD wird von den meisten Herstellern im ersten Schritt mit 2Mbit/s Datenbitrate und 500kbit/s Arbitrationsbitrate im Fahrzeug eingesetzt.

WO 2019/030214 beschreibt eine Weiterentwicklung der CAN Protokoll-Spezifikation mit CAN FD, die den Nachteil einer IP-Kommunikation im Kfz-Bereich vermeiden soll. Hierfür wird eine inhaltsabhängige, feingranulare prioritätsbasierte Arbitrierung mit Ethernet kombiniert. Bei der Kommunikation werden Rahmen verwendet, in welchen eine Prüfsumme nach einem Daten-Feld eingefügt, das für Nutzdaten in dem Rahmen vorgesehen ist. Die Prüfsumme wird über ein Start-Feld, ein Arbitrierungs-Feld, ein Steuerungs-Feld und das Daten-Feld berechnet.

Um noch größere Datenraten zu ermöglichen, wird derzeit ein Nachfolgebussystem für CAN FD entwickelt, das nachfolgend CAN XL genannt wird. CAN XL soll neben dem reinen Datentransport über den CAN-Bus auch andere Funktionen unterstützen, wie funktionale Sicherheit (Safety), Datensicherheit (Security) und Dienstgüte (QoS = Quality of Service). Dies sind elementare Eigenschaften, die in einem autonom fahrenden Fahrzeug benötigt werden.

Sehr vorteilhaft ist, wenn CAN XL und CAN FD sowie Classical CAN kompatibel sind. In einem solchen Fall wird mit Hilfe des res-Bit im CAN FD Rahmen zwischen CAN FD und CAN XL Rahmen unterschieden. Aufgrund der Kompatibilität sind bis zu diesem res-Bit auch bei CAN XL die Regeln zu dynamischen Stuff-Bits anzuwenden, die für das CAN FD Arbitrationsfeld verwendet werden.

Für die funktionale Sicherheit eines Systems ist es sehr vorteilhaft und wichtig, dass die Restfehlerwahrscheinlichkeit möglichst gering ist. Eine Klasse 1 von Fehlern, nämlich fälschlicherweise invertiert abgetastete Bits (Bit Flips), und/oder eine Klasse 2 von Fehlern, nämlich lokal gehäufte Bitfehler (Burst Fehler), können mit Hilfe einer Prüfsumme (CRC = Cyclic Redundancy Check) mit ausreichender Wahrscheinlichkeit erkannt werden. Es soll angemerkt werden, dass eine empfangende Teilnehmerstation auch eine Formatprüfung des Rahmens vornimmt. Dies hilft, insbesondere auch Burstfehler (Bündelfehler) zu erkennen. Die Güte der Fehlererkennung lässt sich über die Restfehlerwahrscheinlichkeit ausdrücken. Die Restfehlerwahrscheinlichkeit gibt an, wie wahrscheinlich es ist, dass ein Rahmen trotz Fehlers bei einer empfangenden Teilnehmerstation (Empfangsknoten) des Bussystems, die kein Sender des Rahmens ist, als korrekt akzeptiert wird.

Bei Classical CAN hat die CRC-Berechnung folgenden Nachteil. Bei Classical CAN gehen die dynamischen Stuff-Bits nicht in die CRC-Berechnung ein. Aus diesem Grund gibt es bei Classical CAN eine Klasse 3 von Fehlern, welche die Prüfsumme (CRC) nicht sicher erkennen kann. Dieser Fehler (Klasse 3) wird durch das Umkippen von nur zwei Bits verursacht, was auch als Bit Flip bezeichnet wird. Hierbei erzeugt der eine Bit Flip eine dynamische Stuff-Bedingung und der andere Bit Flip hebt eine dynamische Stuff-Bedingung auf. Dabei ist die Reihenfolge der Bit Flips in den seriell übertragenen Bits (Bitstrom) egal. Somit erkennt die CRC-Berechnung einen derartigen Fehler mit großer Wahrscheinlichkeit nicht, auch wenn die CRC-Berechnung eigentlich bei Classical CAN fünf Bit Flips (Fehler der Klasse 1) sicher erkennen kann. Somit ist ein Fehler der Klasse 3 ein besonders problematischer Fall oder ein kritischer Fehler.

Um bei CAN FD robust zu sein gegen den Fehler der Klasse 3, werden bei CAN FD die dynamischen Stuff-Bits in die CRC Berechnung einbezogen. Es hat sich jedoch später herausgestellt, dass es hier einen Fehler der Klasse 4 gibt, der von der CAN FD CRC nicht erkannt wird. Dieser Fehler der Klasse 4 ist ein einzelner Bitverlust (Bit Drop) oder eine Biteinfügung (Bit Insertion) in den Datenstrom der empfangenden Teilnehmerstation bei einer dynamischen Stuff-Bedingung. Das heißt wegen einer falschen Re-Synchronisation sieht die empfangende Teilnehmerstation ein Bit mehr oder ein Bit weniger als tatsächlich von der sendenden Teilnehmerstation (Sendeknoten) übertragen wird. Dies fällt aber nicht auf, weil die dynamischen Stuff-Bits bei CAN nur nach 5 gleichen Bits mit dem gleichem Wert eingefügt werden.

Die Einbeziehung der dynamischen Stuff-Bits in die CRC Berechnung bei CAN FD machen einen "Stuff-Bit-Zähler" im CRC Feld notwendig. Dieser "Stuff-Bit-Zähler" reduziert die Wahrscheinlichkeit, dass ein Fehler der Klasse 4 unentdeckt bleibt, löst das Problem aber nicht ganz. Ein solcher "Stuff-Bit-Zähler" führt außerdem zu Komplexität und Datenüberhang (Overhead), der die übertragbare Nutzdatenrate herabsetzt.

Außerdem gibt es bei CAN FD keine Kopfprüfsumme (Header CRC). Dadurch ist ein Fehler im Code des Datenlängefelds (DLC = DataLengthCode) nicht zu erkennen.

Somit kann ein Bitfehler im Code des Datenlängefelds dazu führen, dass eine empfangende Teilnehmerstation (Empfangsknoten) des Bussystems, die kein Sender des CAN FD-Rahmens ist, in dem CAN FD-Rahmen eine falsche Rahmenlänge dekodiert. Daher prüft die empfangende Teilnehmerstation (Empfangsknoten) die Prüfsumme (CRC) an der falschen Stelle.

Würde die CRC Berechnung bei CAN XL so durchgeführt wie bei CAN FD, dann hätte CAN XL die gleichen Nachteile wie CAN FD.

Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, bei welchen Fehler im Zusammenhang mit dynamischen Stuff-Bits in einem Bitstrom mit großer Sicherheit erkannt werden, um auch bei hoher Datenrate und einer Steigerung der Menge der Nutzdaten pro Rahmen eine große Fehlerrobustheit der Kommunikation zu realisieren.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems, und einer Sende-/Empfangseinrichtung, die zum seriellen Senden eines von der Kommunikationssteuereinrichtung erzeugten Sendesignals auf einen Bus des Bussystems ausgestaltet ist, und die zum seriellen Empfangen von Signalen von dem Bus des Bussystems ausgestaltet ist, wobei die Kommunikationssteuereinrichtung ausgestaltet ist, das Sendesignal gemäß einem Rahmen zu erzeugen und in dem Rahmen eine Kopfprüfsumme einzufügen, in die nur Bits eines Rahmenkopfes einberechnet sind, der vor einem Datenfeld angeordnet ist, das für Nutzdaten in dem Rahmen vorgesehen ist, wobei die Kommunikationssteuereinrichtung ausgestaltet ist, in den Rahmenkopf dynamische Stuff-Bits derart einzufügen, dass nach 5 gleichen Bits in Folge ein inverses Stuff-Bit in den Bitstrom des Rahmens eingefügt wird, und wobei die Kommunikationssteuereinrichtung ausgestaltet ist, für die Berechnung der Kopfprüfsumme einen vorbestimmten Startwert und ein vorbestimmtes Prüfsummenpolynom zu verwenden, mit welchen das Zwischenergebnis der Berechnung der Kopfprüfsumme für den Teil des Rahmenkopfes, in dem dynamische Stuff-Bits verwendet werden, ungleich einem Nullvektor ist.

Durch die Ausgestaltung der Teilnehmerstation ist eine hohe Fehlererkennungswahrscheinlichkeit bei der Berechnung der Kopfprüfsumme bei CAN XL möglich. Dadurch können Fehler in der Kopfprüfsumme HCRC im Zusammenhang mit dynamischen Stuff-Bits minimiert werden. Im Ergebnis können Fehler bei der Kommunikation im Bussystem schnell und sicher aufgedeckt werden.

Insgesamt kann die beschriebene Teilnehmerstation durch ihre Ausgestaltung die beiden genannten Nachteile von CAN FD im Zusammenhang mit Stuff-Bits sehr gut vermeiden. Das heißt, die Teilnehmerstation kann einen Fehler bei der Abtastung des Datenlängecodes ausreichend sicher erkennen. Noch dazu kann die Teilnehmerstation durch ihre Ausgestaltung dennoch optional zusätzliche Felder im Rahmen einsparen, um die übertragbare Nutzdatenrate zu erhöhen. Demzufolge wird bei der zuvor beschriebenen Teilnehmerstation beispielsweise ein "Stuff Count" wie bei CAN FD nicht zwingend benötigt.

Infolgedessen kann mit der Teilnehmerstation auch bei Steigerung der Menge der Nutzdaten pro Rahmen ein Senden und Empfangen der Rahmen mit großer funktionaler Sicherheit bei großer Flexibilität im Hinblick auf aktuelle Ereignisse im Betrieb des Bussystems und mit geringer Fehlerquote gewährleistet werden.

Hierbei ist es mit der Teilnehmerstation in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Der vorbestimmte Startwert kann gleich (1,0,0,0,0,0,0,0,0,0,0,0,0) sein.

Alternativ ist der vorbestimmte Startwert gleich (0,0,1,1,0,0,0,0,0,0,0,0,0).

Denkbar ist, dass die Kommunikationssteuereinrichtung ausgestaltet ist, für die Berechnung der Kopfprüfsumme mindestens ein Schaltelement einer elektrischen Schaltung zu verwenden, das auf den vorbestimmten Startwert einstellbar ist, und das oder die ein vorbestimmtes Prüfsummenpolynom realisiert.

Möglicherweise ist das vorbestimmte Prüfsummenpolynom (CRC_P) gleich $x^{13} + x^{12} + x^{11} + x^8 + x^7 + x^6 + x^5 + x^2 + x^1 + 1$.

Für die optionale Kompatibilität mit CAN FD ist die Kommunikationssteuereinrichtung ausgestaltet, nur in einen ersten Teil des Rahmenkopfs dynamische Stuff-Bits einzufügen.

Gemäß einer Option ist die Kommunikationssteuereinrichtung ausgestaltet, ein Feld in den Rahmen einzufügen, in dem die Anzahl der dynamischen Stuff-Bits codiert ist, wobei die Kommunikationssteuereinrichtung ausgestaltet ist, das mindestens eine Feld vor einem Datenfeld einzufügen, in dem Nutzdaten des Rahmens eingefügt sind.

Optional ist Sende-/Empfangseinrichtung zum seriellen Senden eines von der Kommunikationssteuereinrichtung erzeugten Sendesignals auf einen Bus des Bussystems derart ausgestaltet, dass sich für eine Nachricht, die zwischen Teilnehmerstationen des Bussystems ausgetauscht wird, die Bitzeit eines in einer ersten Kommunikationsphase auf den Bus gesendeten Signals unterscheiden kann von einer Bitzeit eines in einer zweiten Kommunikationsphase gesendeten Signals.

Möglich ist, dass der für die Nachricht gebildete Rahmen kompatibel zu CAN FD aufgebaut ist, wobei in einer ersten Kommunikationsphase ausgehandelt wird, welche der Teilnehmerstationen des Bussystems in einer nachfolgenden zweiten Kommunikationsphase einen zumindest zeitweise exklusiven, kollisionsfreien Zugriff auf den Bus bekommt.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 11 gelöst. Das Verfahren wird mit einer Teilnehmerstation des Bussystems ausgeführt, die eine Kommunikationssteuereinrichtung und eine Sende-/Empfangseinrichtung aufweist, wobei das Verfahren die Schritte aufweist Steuern, mit der Kommunikationssteuereinrichtung einer Kommunikation der Teilnehmerstation mit mindestens einer anderen Teilnehmerstation des Bussystems, und Senden, mit der Sende-/Empfangseinrichtung, eines von der Kommunikationssteuereinrichtung erzeugten Sendesignals auf einen Bus des Bussystems, wobei die Sende-/Empfangseinrichtung zudem zum seriellen Empfangen von Signalen von dem Bus des Bussystems ausgestaltet ist, Erzeugen, mit der Kommunikationssteuereinrichtung, des Sendesignals gemäß einem Rahmen, wobei die Kommunikationssteuereinrichtung in dem Rahmen eine Kopfprüfsumme einfügt, in die nur Bits eines Rahmenkopfes einberechnet sind, der vor einem Datenfeld angeordnet ist, das für Nutzdaten in dem Rahmen vorgesehen ist, wobei die Kommunikationssteuereinrichtung in den Rahmenkopf dynamische Stuff-Bits derart einfügt, dass nach 5 gleichen Bits in Folge ein inverses Stuff-Bit in den Bitstrom des Rahmens eingefügt wird, und wobei die Kommunikationssteuereinrichtung für die Berechnung der Kopfprüfsumme einen vorbestimmten Startwert und ein vorbestimmtes Prüfsummenpolynom verwendet wobei die Kommunikationssteuereinrichtung für die Berechnung der Kopfprüfsumme einen vorbestimmten Startwert und ein vorbestimmtes Prüfsummenpolynom verwendet, mit welchen das Zwischenergebnis der Berechnung der Kopfprüfsumme für den Teil des Rahmenkopfes, in dem dynamische Stuff-Bits verwendet werden, ungleich einem Nullvektor ist.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Zeichnungen

Nachfolgend ist die Erfindung unter Bezugnahme auf die beiliegende Zeichnung und anhand von Ausführungsbeispielen näher beschrieben. Es zeigen:

Fig. 1 ein vereinfachtes Blockschaltbild eines Bussystems gemäß einem ersten Ausführungsbeispiel;

Fig. 2 ein Schaubild zur Veranschaulichung des Aufbaus einer Nachricht, die von einer Teilnehmerstation des Bussystems gemäß dem ersten Ausführungsbeispiel gesendet werden kann;

Fig. 3 ein vereinfachtes schematisches Blockschaltbild einer Teilnehmerstation des Bussystems gemäß dem ersten Ausführungsbeispiel;

Fig. 4 einen zeitlichen Verlauf von Bussignalen CAN-XL_H und CAN-XL_L bei der Teilnehmerstation gemäß dem ersten Ausführungsbeispiel;

Fig. 5 einen zeitlichen Verlauf einer Differenzspannung VDIFF der Bussignale CAN-XL_H und CAN-XL_L bei der Teilnehmerstation gemäß dem ersten Ausführungsbeispiel;

Fig. 6 ein Schaltbild einer elektrischen Schaltung zum Berechnen der Kopfprüfsumme gemäß einem zweiten Ausführungsbeispiel; und

Fig. 7 ein Schaubild zur Veranschaulichung des Aufbaus einer Nachricht, die von einer Teilnehmerstation des Bussystems gemäß einem dritten Ausführungsbeispiel gesendet werden kann.

In den Figuren sind gleiche oder funktionsgleiche Elemente, sofern nichts anderes angegeben ist, mit denselben Bezugszeichen versehen.

Beschreibung der Ausführungsbeispiele

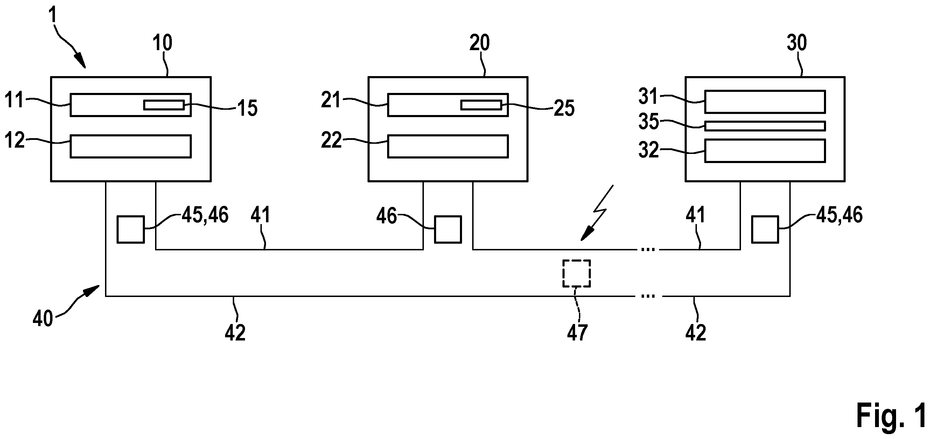

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der dominanten Pegel bzw. Erzeugung von rezessiven Pegeln oder anderen Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und ein Rahmenprüfmodul 15. Die Teilnehmerstation 20 hat eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und ein Rahmenprüfmodul 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

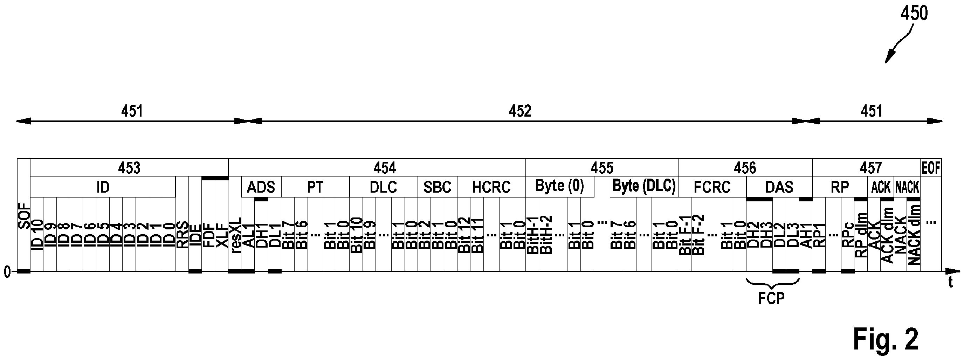

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN XL-Formats aufgebaut, das in Bezug auf Fig. 2 detaillierter beschrieben ist, und bei welchem das jeweilige Rahmenprüfmodul 15, 35 zum Einsatz kommt. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtung 32 bereitzustellen oder von dieser zu empfangen. Auch hierbei kommen die jeweiligen Rahmenprüfmodule 15, 35 zum Einsatz. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN XL-Format oder Nachrichten 46 gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN XL-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat ein Arbitrationsfeld 453, ein Steuerfeld 454, ein Datenfeld 455, ein Prüfsummenfeld 456 für eine Prüfsumme FCRC und eine Umschaltsequenz ADS sowie ein Bestätigungsfeld 457.

In der Arbitrationsphase 451 wird mit Hilfe eines Identifizierers (ID) in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-XL-Rahmens bzw. der Nachricht 45 aus dem Datenfeld 455 sowie das Prüfsummenfeld 456 für die Prüfsumme FCRC und außerdem ein Feld DAS gesendet, das zur Umschaltung von der Datenphase 452 zurück zur Arbitrationsphase 451 dient.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN XL im Vergleich zu CAN oder CAN FD folgende abweichenden Eigenschaften realisiert werden:

a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 4kbyte oder einen beliebigen anderen Wert.

Wie in Fig. 2 dargestellt, verwendet die Teilnehmerstation 10 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Dagegen verwendet die Teilnehmerstation 10 ab dem FDF-Bit in der ersten Kommunikationsphase sowie in der zweiten Kommunikationsphase, der Datenphase 452, ein CAN XL Format, das nachfolgend beschrieben ist.

Bei dem vorliegenden Ausführungsbeispiel sind CAN XL und CAN FD kompatibel. Hierbei wird das von CAN FD bekannte res-Bit, das nachfolgend XLF-Bit genannt ist, für die Umschaltung von dem CAN FD Format zu dem CAN XL Format genutzt. Daher sind die Rahmenformate von CAN FD und CAN XL bis zum res-Bit gleich. Ein Empfänger erkennt erst bei dem res-Bit, in welchem Format der Rahmen gesendet wird. Eine CAN XL Teilnehmerstation, also hier die Teilnehmerstationen 10, 30, unterstützt auch CAN FD.

Alternativ zu dem in Fig. 2 gezeigten Rahmen 450, bei welchem ein Identifizierer (Identifier) mit 11 Bit verwendet wird, ist optional ein CAN XL Erweitertes Rahmenformat möglich, bei dem ein Identifizierer (Identifier) mit 29 Bit verwendet wird. Dies ist bis zum FDF-Bit identisch zu dem bekannten CAN FD Erweiterten Rahmenformat aus der ISO11898-1:2015.

Gemäß Fig. 2 ist der Rahmen 450 vom SOF-Bit bis einschließlich zum FDF-Bit identisch zum CAN FD Base Frame Format gemäß der ISO11898-1:2015. Daher ist der bekannte Aufbau hier nicht weiter erläutert. Bits, die an ihrer unteren Linie in Fig. 2 mit einem dicken Strich dargestellt sind, werden in dem Rahmen 450 als dominant oder ‚0' gesendet. Bits, die an ihrer oberen Linie in Fig. 2 mit einem dicken Strich dargestellt sind, werden in dem Rahmen 450 als rezessiv oder ‚1' gesendet. In der CAN XL Datenphase 452 werden symmetrische ‚1' und ‚0' Pegel verwendet, statt rezessiver und dominanter Pegel.

Allgemein werden bei der Erzeugung des Rahmens 450 zwei unterschiedliche Stuffing-Regeln angewendet. Bis zum XLF-Bit im Steuerfeld 454 gilt die dynamische Bit-Stuffing-Regel von CAN FD, so dass nach 5 gleichen Bits in Folge ein inverses Stuff-Bit einzufügen ist. Derartige Stuff-Bits werden auch als dynamische Stuff-Bits bezeichnet. Nach einem resXL-Bit im Steuerfeld 454 gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden, wie auch später noch genauer beschrieben.

In dem Rahmen 450 folgt direkt nach dem FDF-Bit das XLF-Bit, das von der Position her dem "res Bit" im CAN FD Base Frame Format entspricht, wie zuvor erwähnt. Wird das XLF-Bit als 1, also rezessiv, gesendet, identifiziert es damit den Rahmen 450 als CAN XL-Rahmen. Für einen CAN FD Rahmen setzt die Kommunikationssteuereinrichtung 11 das XLF-Bit als 0, also dominant.

Nach dem XLF-Bit folgt in dem Rahmen 450 ein resXL-Bit, das ein dominantes Bit für die zukünftige Nutzung ist. Das resXL muss für den Rahmen 450 als 0, also dominant, gesendet werden. Empfängt die Teilnehmerstation 10 jedoch ein resXL-Bit als 1, also rezessiv, geht die empfangende Teilnehmerstation 10 beispielsweise in einen Protokollausnahmezustand (Protocoll Exception State), so wie es bei einer CAN FD Nachricht 46 für ein res=1 ausgeführt wird. Alternativ könnte das resXL-Bit genau umgekehrt definiert sein, also, dass es als 1, also rezessiv, gesendet werden muss. In diesem Fall geht die empfangende Teilnehmerstation bei einem dominanten resXL-Bit in den Protokollausnahmezustand.

Nach dem resXL-Bit folgt in dem Rahmen 450 eine Sequenz ADS (Arbitration Data Switch), in welcher eine vorbestimmte Bitsequenz codiert wird. Diese Bitsequenz erlaubt eine einfache und sichere Umschaltung von der Bitrate der Arbitrationsphase 451 (Arbitrationsbitrate) zu der Bitrate der Datenphase 452 (Datenbitrate). Beispielsweise besteht die Bitsequenz der ADS-Sequenz unter anderem aus einem AL1-Bit, das dominant, also 0, gesendet wird. Das AL1-Bit ist das letzte Bit der Arbitrationsphase 451. Mit anderen Worten, das AL1-Bit ist das letzte Bit vor der Umschaltung in die Datenphase 452 mit den kurzen Bits. Innerhalb des AL1-Bits wird der Physical Layer in der Sende-/Empfangseinrichtung 12, 22, 32 umgeschaltet. Das AL1 Bit könnte auch den Wert 1 haben, je nachdem welcher Wert (0 oder 1) für die Umschaltung des Physical Layers in der Sende-/Empfangseinrichtung 12, 32 (Transceiver) besser geeignet ist. Die zwei folgenden Bits DH1 und DL1 werden bereits mit der Datenbitrate gesendet. Somit sind die Bits DH1 und DL1 bei CAN XL zeitlich kurze Bits der Datenphase 452.

Nach der Sequenz ADS folgt in dem Rahmen 450 ein PT-Feld, das den Inhalt des Datenfeldes 455 kennzeichnet. Der Inhalt gibt an, welche Art von Information in dem Datenfeld 455 enthalten ist. Beispielsweise gibt das PT-Feld an, ob sich im Datenfeld 455 ein "Internet Protocol" (IP) Rahmen befinden, oder ein getunnelter Ethernet Rahmen oder sonstiges.

An das PT-Feld schließt sich ein DLC-Feld an, in welchem der Datenlängencode (DLC = Data Length Code) eingefügt wird, welcher die Anzahl der Bytes im Datenfeld 455 des Rahmens 450 angibt. Der Datenlängencode (DLC) kann jeden Wert von 0 bis zur maximalen Länge des Datenfelds 455 bzw. Datenfeldlänge annehmen. Beträgt die maximale Datenfeldlänge insbesondere 2048 Bit, benötigt der Datenlängencode (DLC) eine Anzahl von 11 Bits unter den Annahmen, dass DLC = 0 eine Datenfeldlänge mit einer Anzahl von 1 Byte bedeutet und DLC = 2047 eine Datenfeldlänge mit einer Anzahl von 2048 Byte Datenfeldlänge bedeutet. Alternativ könnte ein Datenfeld 455 der Länge 0 erlaubt sein, wie beispielsweise bei CAN. Hierbei würde DLC = 0 beispielsweise die Datenfeldlänge mit der Anzahl von 0 Bytes codieren. Die maximale codierbare Datenfeldlänge ist mit beispielsweise 11 Bit dann $(2^{11})-1 = 2047$.

Nach dem DLC-Feld folgt bei dem Beispiel von Fig. 2 in dem Rahmen 450 ein SBC-Feld. Die Abkürzung SBC steht für "Stuff Bit Count". Das SBC-Feld kodiert die Zahl der dynamischen Stuff-Bits im Kopf (Header) des Rahmens 450. Das SBC-Feld kann prinzipiell an jeder Stelle im Kopf (Header) des Rahmens 450 zwischen dem ADS-Feld und dem Ende des Kopfs (Header) des Rahmens 450 platziert werden. Vorteilhaft ist eine Platzierung des SBC-Felds vor eine Kopfprüfsumme HCRC, damit das SBC-Feld von der Kopfprüfsumme HCRC abgesichert werden kann.

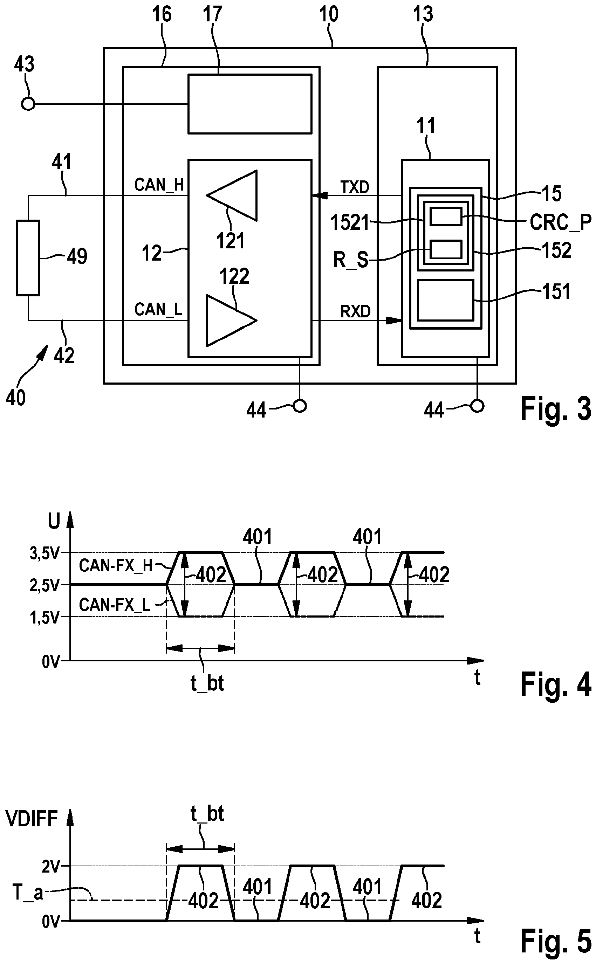

Nach dem SBC-Feld folgt in dem Rahmen 450 von Fig. 2 eine Kopfprüfsumme HCRC. Die Kopfprüfsumme HCRC ist eine Prüfsumme zur Absicherung des Kopfes (Headers) des Rahmens 450, das heißt aller relevanten Bits vom Beginn des Rahmens 450 mit dem SOF-Bit bis zum Beginn der Kopfprüfsumme HCRC, inklusive aller dynamischen und optional der fixed Stuff-Bits bis zum Beginn der Kopfprüfsumme HCRC. Die relevanten Bits umfassen nur die Bits des Rahmenkopfes, die einen veränderbaren Wert haben. Mit anderen Worten, die relevanten Bits umfassen keine Bits, die in dem Rahmen 450 immer einen festen Wert haben. Derartige Bits mit nicht veränderbarem Wert werden also nicht abgesichert, denn diese Bits haben einen festen Wert. Die Länge der Kopfprüfsumme HCRC und damit des Prüfsummen-Polynoms gemäß der zyklischen Redundanzprüfung (CRC) ist entsprechend der gewünschten Hamming-Distanz zu wählen, die ein Maß für die Unterschiedlichkeit von Zeichenketten ist. Das Maß bzw. die Hamming-Distanz gibt an, wie groß die Anzahl der unterschiedlichen Stellen in zwei Zeichenketten bzw. zwei Bitströmen gleicher Länge ist. Das von der Kopfprüfsumme HCRC abzusichernde Datenwort ist bei einem Datenlängencode (DLC) von 11 Bit länger als 27 Bit. Daher muss das Polynom der Kopfprüfsumme HCRC, um eine Hamming-Distanz von 6 zu erreichen, mindestens 13 Bit lang sein. Die Berechnung der Kopfprüfsumme HCRC ist in Bezug auf Fig. 3 noch genauer beschrieben.

Nach der Kopfprüfsumme HCRC folgt in dem Rahmen 450 das Datenfeld 455 (Data Field). Das Datenfeld 455 besteht aus 1 bis n Daten-Bytes, wobei n beispielsweise 2048 Byte oder 4096 Byte oder ein beliebiger anderer Wert ist. Alternativ ist eine Datenfeldlänge von 0 denkbar. Die Länge des Datenfelds 455 ist in dem DLC-Feld codiert, wie zuvor beschrieben.

Nach dem Datenfeld 455 folgt in dem Rahmen 450 eine Rahmenprüfsumme FCRC. Die Rahmenprüfsumme FCRC besteht aus den Bits der Rahmenprüfsumme FCRC. Die Länge der Rahmenprüfsumme FCRC und damit des CRC Polynoms ist entsprechend der gewünschten Hamming-Distanz zu wählen. Die Rahmenprüfsumme FCRC sichert den gesamten Rahmen 450 ab. Alternativ ist optional nur das Datenfeld 455 mit der Rahmenprüfsumme FCRC abgesichert.

Nach der Rahmenprüfsumme FCRC folgt in dem Rahmen 450 die Sequenz DAS (Data Arbitration Switch), in welcher eine vorbestimmte Bitsequenz codiert wird. Diese Bitsequenz erlaubt eine einfache und sichere Umschaltung von der DatenBitrate der Datenphase 452 zu der Arbitrations-Bitrate der Arbitrationsphase 451. Beispielsweise beginnt die Bit Sequenz mit den Datenbits DH2, DH3 die als 1 gesendet werden und den Datenbits DL2, DL3 die als 0 gesendet werden, wie in Fig. 2 gezeigt. Das sind die letzten 4 Bits der Datenphase 452. Somit ist das DL3-Bit das letzte kurze Bit, d.h. das letzte Bit vor der Umschaltung in die Arbitrationsphase 451 mit den langen Bits. Die Bits werden gefolgt von einem AH1-Bit mit dem Wert 1 der Arbitrations-Phase 451. Innerhalb des AH1-Bits wird der Physical Layer in der Sende-/Empfangseinrichtung 12, 32 (Transceiver) umgeschaltet. Das AH1- Bit könnte alternativ den Wert 0 haben, je nachdem welcher Wert (0 oder 1) für die Umschaltung des Physical Layers in der Sende-/Empfangseinrichtung 12, 32 (Transceiver) besser geeignet ist. Eine RX-Teilnehmerstation 10, 30, die nur Empfänger des Rahmens 450 ist, also den empfangenen Rahmen 450 nicht gesendet hat, verwendet die Bitsequenz DH2, DH3, DL2, DL3 nicht nur zur Synchronisation, sondern auch als Formatprüfmuster (Format Check Pattern). Mit dieser Bitsequenz kann die RX-Teilnehmerstation 10, 30 erkennen, ob sie den von dem Bus 40 empfangenen Bitstrom versetzt abtastet, beispielsweise um 1 Bit oder 2 Bit, usw.. Gemäß einem anderen Beispiel hat das DAS-Feld drei Bits, also das DH2-Bit, das DL2-Bit und ein AH1-Bit. Von den Bits werden das erste und letzte Bit als 1 gesendet und das mittlere Bit als 0 gesendet.

Bei den obigen Beispielen kann an der Flanke zwischen dem DH3-Bit und dem DL2-Bit bzw. dem DH2-Bit und dem DL2-Bit die Bitrate umgeschaltet in der empfangenden Teilnehmerstation die letzte Synchronisation vor der Umschaltung von der Datenphase 452 in die Arbitrationsphase 451 durchgeführt werden.

Somit ist bei dem vorliegenden Ausführungsbeispiel in der Sequenz DAS ein Formatprüfmuster (FCP = Format Check Pattern) enthalten, mit welchem die Teilnehmerstationen 10, 30, insbesondere ihre Rahmenprüfmodule 15, 35, in der Lage sind, in einem empfangenen Rahmen 450 einen Versatz des Bitstroms zu detektieren, auch wenn die zugehörige Teilnehmerstationen 10, 30 kein Sender, sondern nur Empfänger des Rahmens 450 ist. Hierbei gilt, je länger das Bitmuster des FCP-Felds ist, desto größer oder stärker ist die Verschiebung, die in der empfangenden Teilnehmerstation 10, 30 detektiert werden kann. Das vorteilhafteste Bitmuster für die Verschiebungsdetektion enthält eine gerade Zahl von M Bits, wobei die ersten M/2 Bits eine 1 enthalten und die folgenden M/2 Bits eine 0. Bei dem Beispiel von Fig. 2 mit einem FCP-Feld mit 4 Bits werden die ersten beiden Bits als rezessiv, also 1, gesendet. Die beiden letzten Bits des FCP-Felds werden als dominant, also 0, gesendet. Somit weicht das FCP-Feld mit vier Bits gemäß Fig. 2, wegen der zusätzlichen Bits DH3, DL3, von den üblichen zwei Bits am Anfang des FCP-Felds ab. Jedoch kann die Flanke von rezessiv zu dominant in dem FCP-Feld von Fig. 2 die gleiche Funktion erfüllen wie in einem DAS-Feld, das die Bits DH3, DL3 nicht aufweist.

Ganz allgemein ist es möglich, dass in dem FCP-Feld die ersten M/2 Bits eine 0 enthalten und die folgenden M/2 Bits eine 1. Mit dem Feld FCP kann ein Versatz um M-1 erkannt werden. Dies ist nachfolgend in Bezug auf Fig. 3 noch genauer beschrieben.

Nach der Sequenz DAS folgt in dem Rahmen 450 das Bestätigungsfeld 457, das mit einem RP-Feld beginnt. In dem RP-Feld ist ein Synchronisationsmuster (Sync Pattern) vorgehalten, das einer empfangenden Teilnehmerstation 10, 30 erlaubt, den Beginn der Arbitrationsphase 451 nach der Datenphase 452 zu erkennen. Das Synchronisationsmuster erlaubt empfangenden Teilnehmerstationen 10, 30, die beispielsweise aufgrund einer falschen Kopfprüfsumme HCRC die korrekte Länge des Datenfelds 455 nicht kennen, sich aufzusynchronisieren. Anschließend können diese Teilnehmerstationen ein "Negativ Acknowledge" senden, um den fehlerhaften Empfang mitzuteilen. Dies ist insbesondere dann sehr wichtig, wenn CAN XL im Datenfeld 455 keine Fehlerrahmen 47 (Error Flags) erlaubt.

Nach dem RP-Feld folgen in dem Bestätigungsfeld (ACK Field) 457 mehrere Bits zur Bestätigung oder Nichtbestätigung eines korrekten Empfangs des Rahmens 450. Bei dem Beispiel von Fig. 2 sind ein ACK-Bit, ein ACK-dlm-Bit, ein NACK-Bit und ein NACK-dlm-Bit vorgesehen. Das NACK-Bit und das NACK-dlm-Bit sind optionale Bits. Das ACK-Bit senden die empfangenden Teilnehmerstationen 10, 30 als dominant, wenn sie den Rahmen 450 korrekt empfangen haben. Die sendende Teilnehmerstation sendet das ACK-Bit als rezessiv. Daher kann das ursprünglich in dem Rahmen 450 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450 auf dem Bus 40 signalisieren kann. Die Funktion der Bits ist wie die des ACK-Bits und des ACK-dlm-Bits.

Nach dem Bestätigungsfeld (ACK Field) 457 folgt in dem Rahmen 450 ein Endefeld (EOF = End of Frame). Die Bitsequenz des Endefelds (EOF) dient dazu, das Ende des Rahmens 450 zu kennzeichnen. Das Endefeld (EOF) sorgt dafür, dass am Ende des Rahmens 450 eine Anzahl von 8 rezessiven Bits gesendet wird. Das ist eine Bitfolge, die innerhalb des Rahmens 450 nicht auftreten kann. Dadurch kann von den Teilnehmerstationen 10, 20, 30 das Ende des Rahmens 450 sicher erkannt werden.

Das Endefeld (EOF) hat eine Länge, die abhängig davon unterschiedlich ist, ob im NACK-Bit ein dominantes Bit oder ein rezessives Bit gesehen wurde. Wenn die sendende Teilnehmerstation das NACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in dem Rahmen 450 ein Zwischenrahmenabstand (IFS - Inter Frame Space), der in Fig. 2 nicht dargestellt ist. Dieser Zwischenrahmenabstand (IFS) ist ausgestaltet wie bei CAN FD entsprechend der ISO11898-1:2015.

Fig. 3 zeigt den grundlegenden Aufbau der Teilnehmerstation 10 mit der Kommunikationssteuereinrichtung 11, der Sende-/Empfangseinrichtung 12 und dem Rahmenprüfmodul 15, das Teil der Kommunikationssteuereinrichtung 11 ist. Die Teilnehmerstation 30 ist in ähnlicher Weise aufgebaut, wie in Fig. 3 gezeigt, jedoch ist das Rahmenprüfmodul 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 3 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

Das Rahmenprüfmodul 15 hat einen Einfügeblock 151 und einen Auswerteblock 152. Der Auswerteblock 152 verwendet eine vorbestimmte elektrische Schaltung 1521 zur Umsetzung eines vorbestimmten CRC-Polynoms CRC_P zur Berechnung der Kopfprüfsumme HCRC. Der Auswerteblock 152 initialisiert die Berechnung der Kopfprüfsumme HCRC bei jedem Rahmen 450 mit einem Startwert R_S. Somit dient das Rahmenprüfmodul 15, insbesondere dessen Auswerteblock 152, zum Bilden und Prüfen der Kopfprüfsumme und der Rahmenprüfsumme, sowie zum Prüfen der Anzahl der dynamischen Stuff-Bits. Das Rahmenprüfmodul 15 ist nachfolgend noch genauer beschrieben.

Die Sende-/Empfangseinrichtung 12 hat zudem ein Sendemodul 121 und ein Empfangsmodul 122. Auch wenn nachfolgend immer von der Sende-/Empfangseinrichtung 12 gesprochen ist, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sendemodul 121, das auch als Transmitter bezeichnet wird, und mit dem Empfangsmodul 122 verbunden, das auch als Receiver bezeichnet wird, auch wenn die Verbindung in Fig. 3 zur Vereinfachung nicht gezeigt ist.

Im Betrieb des Bussystems 1 setzt das Sendemodul 121 ein Sendesignal TXD oder TxD der Kommunikationssteuereinrichtung 11 in entsprechende Signale CAN-XL_H und CAN-XL_L für die Busadern 41, 42 um und sendet diese Signale CAN-XL_H und CAN-XL_L an den Anschlüssen für CAN_H und CAN_L auf den Bus 40.

Das Empfangsmodul 122 bildet aus von Bus 40 empfangenen Signalen CAN-XL_H und CAN-XL_L gemäß Fig. 4 ein Empfangssignal RXD oder RxD und gibt dieses an die Kommunikationssteuereinrichtung 11 weiter, wie in Fig. 3 gezeigt. Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

Gemäß dem Beispiel von Fig. 4 haben die Signale CAN-XL_H und CAN-XL_L zumindest in der Arbitrationsphase 451 die dominanten und rezessiven Buspegel 401, 402, wie von CAN bekannt. Auf dem Bus 40 bildet sich ein Differenzsignal VDIFF = CAN-XL_H - CAN-XL_L aus, das in Fig. 5 gezeigt ist. Die einzelnen Bits des Signals VDIFF mit der Bitzeit t_bt können mit einer Empfangsschelle von 0,7 V erkannt werden. In der Datenphase 452 werden die Bits der Signale CAN-XL_H und CAN-XL_L schneller, also mit einer kürzeren Bitzeit t_bt, gesendet als in der Arbitrationsphase 451. Somit unterscheiden sich die Signale CAN-XL_H und CAN-XL_L in der Datenphase 452 zumindest in deren schnelleren Bitrate von den herkömmlichen Signalen CAN_H und CAN_L.

Die Abfolge der Zustände 401, 402 für die Signale CAN-XL_H, CAN-XL_L in Fig. 4 und der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Mit anderen Worten erzeugt das Sendemodul 121 in einer ersten Betriebsart gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet das Sendemodul 121, für die zeitlichen Verläufe der Signale CAN-XL_H, CAN-XL_L in einer zweiten Betriebsart, welche die Datenphase 452 umfasst, die Bits mit einer höheren Bitrate auf den Bus 40. Die CAN-XL_H und CAN-XL_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD.

Das Rahmenprüfmodul 15 von Fig. 3, insbesondere dessen Einfügeblock 151, dient zum Einfügen des SBC-Felds und des FCP-Felds in den Rahmen 450, wenn die Teilnehmerstation 10 als Sender des Rahmens 450 agiert. Zudem ist das Rahmenprüfmodul 15 von Fig. 3, insbesondere dessen Auswerteblock 152, ausgestaltet für die Berechnung der Kopfprüfsumme HCRC den vorbestimmten Startwert R_S zu verwenden, wenn die Teilnehmerstation 10 als Sender oder Empfänger des Rahmens 450 agiert. Der vorbestimmte Startwert R_S wird auch als Initialisierungswert (Init-Wert) bezeichnet. Der Auswerteblock 152 ist ausgestaltet, ausgehend von diesem Startwert R_S die Kopfprüfsumme HCRC zu berechnen und dabei das vorbestimmte CRC-Polynom CRC_P zu verwenden, wie zuvor erwähnt.

Das Rahmenprüfmodul 15 von Fig. 3 ist bei dem vorliegenden Ausführungsbeispiel derart ausgestaltet, dass das SBC-Feld drei Bits hat, also ein BitO, ein Bit1 und ein Bit2. Dadurch erzeugt das SBC-Feld möglichst wenig Überhang an Daten (Daten-Overhead). In dem SBC-Feld trägt das Rahmenprüfmodul 15 in die Bits Bit0 und Bit1 die Anzahl der dynamischen Stuff-Bits ein und in Bit2 die Parität der ersten zwei Bits.

Der Einfügeblock 151 fügt das SBC-Feld bei dem vorliegenden Ausführungsbeispiel vor der Kopfprüfsumme HCRC im Rahmen 450 ein. Das Rahmenprüfmodul 15, insbesondere der Auswerteblock 152, verwendet auch das SBC-Feld beim Bilden der Kopfprüfsumme HCRC sowie alle dynamischen Stuff-Bits des Rahmenkopfes. Im Ergebnis sind Fehler der Klasse 3 und der Klasse 4 detektierbar.

Der Auswerteblock 152 in der empfangenden Teilnehmerstation kann die Anzahl der empfangenen dynamischen Stuff-Bits im Rahmenkopf mit dem Wert in dem SBC-Feld vergleichen und somit eine Abweichung, also Fehler, im Vergleich zu der tatsächlichen Anzahl im Rahmenkopf erkennen.

Dagegen lässt der Auswerteblock 152 die dynamischen Stuff-Bits beim Bilden der Rahmenprüfsumme FCRC weg. Jedoch berechnet der Auswerteblock 152 die anderen Bits des Rahmenkopfes, wie ID-Bit, RRS-Bit, usw., in die Rahmenprüfsumme FCRC mit ein. Diese Bits sind also doppelt abgesichert. Dadurch sind mit dem Rahmenprüfmodul 15, insbesondere mit dessen Auswerteblock 152, Fehler der Klasse 3 und Klasse 4, die im Zusammenhang mit dynamischen Stuff-Bits auftreten, mit sehr hoher Wahrscheinlichkeit detektierbar.

Zum Berechnen der Kopfprüfsumme HCRC geht der Auswerteblock 152 von dem vorbestimmten Startwert R_S aus. Der vorbestimmte Startwert R_S ist R_S = (1,0,0,0,0,0,0,0,0,0,0,0,0). Der Auswerteblock 152 hat als Schaltungselement der elektrischen Schaltung 1521 insbesondere ein rückgekoppeltes Schieberegister entsprechend den Eigenschaften (Koeffizienten) des CRC-Polynoms CRC_P. Der Wert im Schieberegister wird im Folgenden als Vector R bezeichnet. Mit diesem rückgekoppelten Schieberegister lässt sich eine bitweise Berechnung der Kopfprüfsumme durchführen. Der Auswerteblock 152 initialisiert das Schieberegister R mit dem Startwert R_S zu Beginn jedes Rahmens. Die einzelne '1' im Vector R_S ist an der niederwertigsten Stelle, die auch LSB-Position genannt wird.

Der vorbestimmte Startwert R_S verhindert einen Fehlerfall B. Bei dem Fehlerfall B tritt ein Bitverlust (Bit Drop) oder eine Biteinfügung (Bit Insertion) in den Datenstrom der empfangenden Teilnehmerstation (Empfangsknoten) bei einer dynamischen Stuff-Bedingung auf, wobei gleichzeitig der temporäre Wert der CRC-Berechnung der Kopfprüfsumme HCRC ein Null-Vector R = "0...0" ist. Der Fehlerfall B kann wegen einer falschen Re-Synchronisation auftreten, bei der der Empfangsknoten ein Bit mehr oder ein Bit weniger sieht als tatsächlich vom Sendeknoten übertragen wird.

Ein Beispiel für einen Bitverlust (Bit Drop) ist: 100000i wird zu 100001 Beispiel für eine Biteinfügung (Bit Insertion): 100001 wird zu 100000i

Bei diesen Beispielen steht i für ein dynamisches Stuff Bit mit dem Wert 1.

Falls bei der Berechnung der Kopfprüfsumme HCRC, bei der dynamische Stuff-Bits mit in die Berechnung einbezogen werden, bei den genannten Beispielen das Zwischenergebnis den Vektor R="0...0" ergibt, bleibt der Vektor R="0...0", solange in das rückgekoppelte Schieberegister für die CRC Berechnung im Auswerteblock 152 nur 0 Bits eingespeist werden. Mit anderen Worten, das Ergebnis der Berechnung der Kopfprüfsumme HCRC bleibt gleich, wenn eine 0 mehr oder eine 0 weniger in die CRC Berechnung eingespeist wird. Somit ist die CRC Berechnung des Auswerteblocks 152 ohne den vorbestimmten Startwert R_S blind für diesen Fall, den Fehlerfall B, der mit dynamischen Stuff Bits zu tun hat. Bereits ein einziger Fehler dieser Art führt dazu, dass die CRC-Prüfung den Fehler nicht detektieren kann.

Der vorbestimmte Startwert R_S = (1,0,0,0,0,0,0,0,0,0,0,0,0) ist unter der Überlegung gewählt, dass der Fehlerfall B nur in den ersten 17 Bits eines seriell gesendeten Rahmens 450 auftreten kann. Grund dafür ist, dass nur in diesem Teil des Kopfes des Rahmens 450 dynamische Stuff-Bits verwendet werden. Dieser erste Teil des Kopfes des Rahmens 450 besteht aus 14 Bit (SOF, ID, RRS, IDE) plus maximal 3 dynamische Stuff-Bits, das heißt in Summe maximal 17 Bits. Somit ist dieser Teil des Kopfes des Rahmens 450 sehr kurz.

Da von dem Auswerteblock 152 der vorbestimmte Startwert R_S = (1,0,0,0,0,0,0,0,0,0,0,0,0) für die Berechnung der Kopfprüfsumme HCRC verwendet wird, kann der Fehlerfall B nicht auftreten. Dieser vorbestimmte Startwert R_S bewirkt, dass der Vektor R in den ersten 14 bis 17 Bit nicht den Wert R = "0...0" annehmen kann. Hierbei gilt die Beschränkung 14 Bit, falls keine dynamischen Stuff-Bits vorkommen. Die Beschränkung 17 Bit gilt, falls dynamische Stuff-Bits vorkommen. Dieses Ergebnis für den Wert des Vektors R wird für jede gültige Bitfolge eines CAN Rahmens 450 erreicht, das heißt zum Beispiel unabhängig vom Wert des gesendeten Identifizierers (ID) im Rahmen 450. Hierbei wird verwendet, dass der von dem Auswerteblock 152 betrachtete Teil des Rahmenkopfes theoretisch 2 hoch 17 mögliche Bitfolgen haben kann, jedoch von diesen theoretisch möglichen Bitfolgen einige Bitfolgen nicht vorkommen können, da die dynamischen Stuff-Bits eingefügt werden.

Wenn die folgenden Bits des Kopfes des Rahmens 450 in die Berechnung der Kopfprüfsumme HCRC eingehen, nämlich die Bits des Identifizierers (ID), das RRS-Bit sowie dynamische Stuff-Bits, dann erzielt der genannte vorbestimmte Startwert R_S den gewünschten Effekt, nämlich den Fehlerfall B zu verhindern.

Alternativ können auch die zwei Bits (SOF, IDE) mit konstantem Wert in die Berechnung der Kopfprüfsumme HCRC einbezogen werden. Auch in diesem Fall bleibt der Effekt der Verhinderung des Fehlerfalls B erhalten. Das sind alle Bits, einschließlich der dynamischen Stuff-Bits, beginnend mit dem SOF-Bit und bis zu dem dynamischen Stuff-Bit nach dem IDE-Bit.

Dadurch verhindert der vorbestimmte Startwert R_S, dass der Vektor R als das Ergebnis der Berechnung der Kopfprüfsumme HCRC während der ersten 17 Bits des Kopfes den Wert "0...0" annehmen kann.

Bei der Berechnung der Kopfprüfsumme HCRC verwendet der Auswerteblock 152 zusätzlich ein vorbestimmtes CRC-Polynom CRC_P, das eine hohe Fehlererkennungswahrscheinlichkeit hat. Das CRC Polynom für die Kopfprüfsumme HCRC mit einer CRC Länge von 13 ist nachfolgend angegeben. Die Länge der resultierenden Kopfprüfsumme HCRC ist 13 Bit.

Das CRC Generator-Polynom CRC_P kann in hexadezimaler Notation gemäß verschiedenen Konventionen dargestellt werden. Beispielsweise ist das Polynom CRC_P folgendermaßen darstellbar:

1. Als Polynom

$$x^{13} + x^{12} + x^{11} + x^8 + x^7 + x^6 + x^5 + x^2 + x^1 + 1$$
$$= (x + 1) \bullet (x^{12} + x^{10} + x^9 + x^8 + x^6 + x^4 + x^3 + x^2 + 1)$$

2. Mit allen Koeffizienten (hexadezimal): 0x39E7 (vom höchstwertigsten $x^{13}$ bis niederwertigsten $x^0$)

3. Normale Darstellung (hexadezimal): 0x19E7 (höchstwertigster Koeffizient $x^{13}$ weggelassen)

4. Koopman Darstellung (hexadezimal): 0x1CF3 (niederwertigster Koeffizient $x^0$ weggelassen)

Das zuvor genannte vorbestimmte CRC-Polynom CRC_P hat besonders gute Eigenschaften, nämlich:

a) Hamming Distanz: HD 6
b) maximale Anzahl von Nutz-Bits, die abgesichert werden können: 52
c) besonders kleine erzielbare Restfehlerwahrscheinlichkeit im Vergleich mit anderen CRC-Polynomen mit HD6

Somit kann die empfangende Teilnehmerstation (Empfangsknoten) 10, insbesondere ihr Rahmenprüfmodul 15 und genauer ihr Auswerteblock 152, die Fehler der Klassen 1 bis 4 sowie den Fehlerfall B mit großer Wahrscheinlichkeit erkennen. Diese Fehler können durch das gewählte CRC-Polynom und dessen Startwert R_S mit besonders großer Wahrscheinlichkeit erkannt werden, wie zuvor beschrieben.

Der Auswerteblock 152 gibt eine entsprechende Mitteilung an die Kommunikationssteuereinrichtung 11 aus. Damit kann der empfangene Rahmen 450 im Falle eines Fehlers verworfen werden. In Folge dessen kann die Kommunikationssteuereinrichtung 11 einen Fehlerrahmen 47 zum Bus 40 senden.

Verwendet man jedoch ein "Stuff Count" Feld, wie das SBC-Feld, so reduziert man die Restfehlerwahrscheinlichkeit weiter. Demzufolge wird es noch unwahrscheinlicher, dass ein fehlerhafter Rahmen 450 als gültig akzeptiert wird.

Somit ist die Verwendung des SBC-Feldes "Stuff Counts" Feldes, welches die Zahl der dynamischen Stuff Bits im gesendeten Rahmen kodiert, optional.

Ist keine Kompatibilität zu CAN FD gefordert, so können im Rahmen z.B. anstatt dynamischer Stuff-Bits sogenannte fixed Stuff-Bits (Stuff-Bits die immer da sind) verwendet werden. Ohne dynamische Stuff-Bits können die Fehler der Klasse 3 und Klasse 4 nicht auftreten. Zudem kann ein "Stuff Count" Feld wie das SBC-Feld weggelassen werden. Dies führt zu einer geringeren Zahl von zu übertragenden Bits und sogar zu weniger Komplexität.

Gemäß einer ersten Modifikation des ersten Ausführungsbeispiels ist das Rahmenprüfmodul 15, insbesondere der Auswerteblock 152, ausgestaltet, die dynamischen Stuff-Bits beim Bilden der Kopfprüfsumme HCRC wegzulassen. Dagegen verwendet das Rahmenprüfmodul 15, insbesondere der Auswerteblock 152, die dynamischen Stuff-Bits beim Bilden der Rahmenprüfsumme FCRC. Hierbei berechnet das Rahmenprüfmodul 15, insbesondere der Auswerteblock 152, die anderen Bits des Rahmenkopfes, wie ID-Bit, RRS-Bit, usw., wieder in die Rahmenprüfsumme FCRC mit ein. Auch auf diese Weise sind die speziellen Fehler der Klassen 3 und 4 ausreichend sicher detektierbar. Die Detektion kann bei Verwendung von Fehlerrahmen 47 mit einem Fehlerrahmen 47 gemeldet werden.

Gemäß einer zweiten Modifikation des ersten Ausführungsbeispiels ist das Rahmenprüfmodul 15, insbesondere der Auswerteblock 152, ausgestaltet, in keine der Prüfsummen HCRC, FCRC die dynamischen Stuff-Bits mit einzuberechnen. Auch auf diese Weise sind die Fehler der Klassen 3 und 4 ausreichend sicher detektierbar. Der Grund hierfür ist, dass dynamische Stuff-Bits nur vom SOF-Bit bis vor dem FDF-Bit auftreten können. In diesem kleinen Bereich können maximal drei dynamische Stuff-Bits enthalten sein. Folglich ist der Burstfehler (Bündelfehler), der eine blockweise Störung des Bitstroms ist, und den ein Fehler der Klasse 3 erzeugen kann, in der Länge limitiert. Folglich ist die Wahrscheinlichkeit hoch, dass die Header CRC diesen Burstfehler detektieren kann. Die Detektion kann bei Verwendung von Fehlerrahmen 47 mit einem Fehlerrahmen 47 gemeldet werden.

Gemäß einer dritten Modifikation des ersten Ausführungsbeispiels ist der Einfügeblock 151 ausgestaltet, als vorbestimmten Startwert R_S zum Berechnen der Kopfprüfsumme HCRC den Wert R_S = (0,0,1,1,0,0,0,0,0,0,0,0,0) zu verwenden. Der Auswerteblock 152 initialisiert die elektrische Schaltung 1521, insbesondere das Schieberegister R, usw., mit dem Startwert R_S zu Beginn jedes Rahmens 450. Hierbei ist die '0' auf der linken Seite des vorbestimmten Startwerts R_S beispielsweise an der LSB-Position, das heißt an der niederwertigsten Stelle bei der Berechnung der Kopfprüfsumme HCRC mit Hilfe des rückgekoppelten Schieberegisters.

Wenn die folgenden Bits des Kopfes des Rahmens 450 in die Berechnung der Kopfprüfsumme HCRC eingehen, nämlich die Bits des Identifizierers (ID), das RRS-Bit sowie dynamische Stuff-Bits, dann erzielt der genannte vorbestimmte Startwert R_S der vorliegenden Modifikation den gewünschten Effekt, nämlich den Fehlerfall B zu verhindern.

Der Vorteil des vorbestimmten Startwerts R_S = (0,0,1,1,0,0,0,0,0,0,0,0,0) ist, dass auch für die zwei auf die letzten möglichen dynamischen Stuff-Bits folgenden Bits, die in die Berechnung der Kopfprüfsumme HCRC eingehen, garantiert wird, dass der Vektor R der Kopfprüfsumme HCRC den Wert R= "0...0" nicht annehmen kann. Diese zwei folgenden Bits sind beispielsweise das Bit 7 und das Bit 6 der Payload Type.

Gemäß einer vierten Modifikation des ersten Ausführungsbeispiels ist es nicht zwingend, dass das CRC Generator-Polynom CRC_P nur mit einem der zuvor genannten vorbestimmten Startwerte R_S verwendet wird. Alternativ ist ein anderer Startwert R_S verwendbar, bei dem der Vektor R der Kopfprüfsumme HCRC als Zwischenergebnis den Wert R= "0...0" annimmt. Bei einer derartigen Modifikation kann der Fehlerfall B mit etwas geringerer Wahrscheinlichkeit verhindert werden als bei dem ersten Ausführungsbeispiel. Hierbei ist die Erkennung des Fehlerfalls B über das SBC Feld möglich.

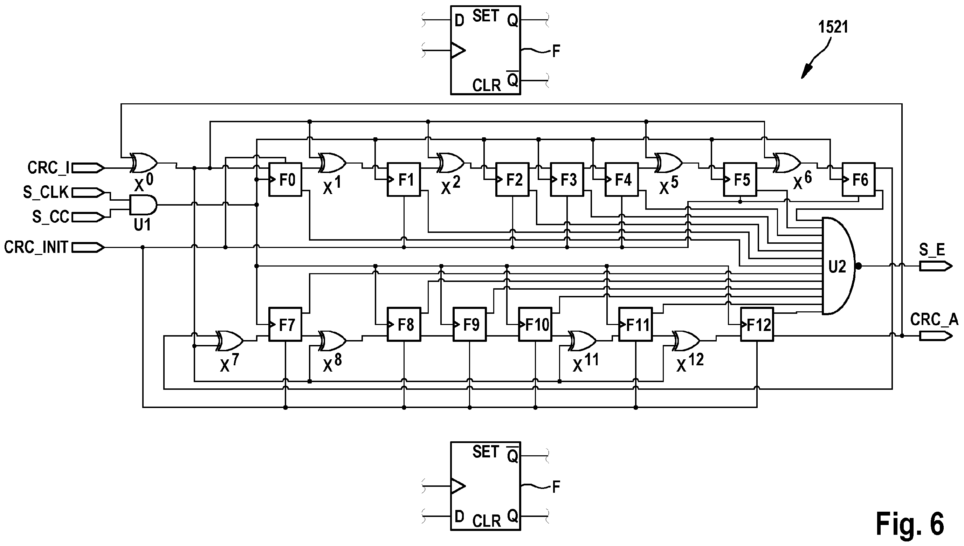

Fig. 6 zeigt gemäß einem zweiten Ausführungsbeispiel ein anderes Beispiel für die Ausgestaltung der elektrischen Schaltung 1521 von Fig. 3. Im Übrigen ist die Teilnehmerstation 10 für die beiden Ausführungsbeispiele gleich aufgebaut.

Die Schaltung 1521 von Fig. 6 ist als Logikschaltung mit Gattern U1, U2, XOR-Gattern $X^0$ bis $X^{12}$ und Flipflops F0 bis F12 mit Ausgängen Q und inversen Ausgängen Q aufgebaut. Die Flipflops F0 bis F12 in Fig. 6 sind alle gleich aufgebaut, auch wenn die Flipflops F0 bis F6 in Fig. 6 gespiegelte Ausgänge haben im Vergleich zu den Flipflops F7 bis F12 in Fig. 6, um die Darstellung der Verschaltung mit dem Gatter U2 zu vereinfachen. Das Flipflop F oben in Fig. 6 zeigt die Verschaltung des Eingangs D und des Takteingangs sowie der Ausgänge Q, Q der Flipflops F0 bis F6 in Fig. 6. Das Flipflop F unten in Fig. 6 zeigt die Verschaltung des Eingangs D und des Takteingangs sowie der Ausgänge Q, Q der Flipflops F7 bis F12 in Fig. 6.

In der Schaltung 1521 werden zunächst mit dem Signal CRC_INIT die einzelnen Flipflops F0 bis F12 so gesetzt bzw. zurückgesetzt, dass das Schieberegister, bestehend aus den Flipflops F0 bis F12, den Startwert R_S enthält. In die Schaltung 1521 wird der serielle Datenstrom als Signal CRC_I eingespeist. Zudem wird ein Taktsignal S_CLK in die Schaltung 1521 und ein Berechnungssignal S_CC eingespeist. Das Berechnungssignal S_CC gibt an, ob die Schaltung einen Berechnungsschritt durchführen soll oder nicht. An einem Ausgang wird ein Signal CRC_A ausgegeben, das in das Feld HCRC für die Kopfprüfsumme HCRC eingetragen wird, wenn die elektrische Schaltung 1521 von der Teilnehmerstation 10 als Sender eines Rahmens 450 verwendet wird. Tritt bei der Berechnung der Kopfprüfsumme HCRC ein Fehler auf, wenn die elektrische Schaltung 1521 für einen von der Teilnehmerstation 10 empfangenen Rahmen 450 verwendet wird, wird ein Signal S_E ausgegeben, wie zuvor in Bezug auf das erste Ausführungsbeispiel beschrieben.

Zum Berechnen der Kopfprüfsumme HCRC werden die Flipflops F0 bis F12 mit Hilfe des Signals CRC_INIT in ihre Startstellung gebracht, genauer gesagt auf den Startwert R_S gesetzt. Beispielsweise wird bei dem Startwert R_S = (1,0,0,0,0,0,0,0,0,0,0,0,0) nur das Flipflop F0 für das niederwertigste Bit (LSB) auf '1' gestellt. Alle anderen Flipflops F1 bis F12 werden dagegen auf den Wert '0' gestellt.

Ein Arbeitsschritt der Schaltung 1521 wird durch die UND-Verknüpfung des Taktsignals S_CLK mit dem Signal S_CC getriggert. Die UND-Verknüpfung wird mit dem UND-Gatter U1 ausgeführt. Für die Bits, die nicht in die CRC-Berechnung einbezogen werden sollen, wird kein Arbeitsschritt ausgeführt. Bei der Kopfprüfsumme HCRC sind dies die Bits, die einen fixen Wert haben, wie zuvor in Bezug auf das erste Ausführungsbeispiel beschrieben.

Ab Beginn des Kopfprüfsummen-Feldes HCRC sendet die Sende-Empfangseinrichtung 12 das Signal CRC_A auf den Bus 40, wenn die Teilnehmerstation 10 Sender des Rahmens 450 ist. Ist die Teilnehmerstation 10 nur Empfänger, also kein Sender, des Rahmens 450, wird das Signal CRC_A nicht gesendet, sondern das Signal S_E verwendet, um festzustellen, ob ein Fehler in der Prüfsumme in dem Feld HCRC des Rahmens 450 vorliegt oder nicht.

Das Signal CRC_E wird bei der Schaltung von Fig. 6 durch ein 13-fach-NAND-Gatter U2 generiert, das die inversen Flipflop-Ausgänge (Q) verknüpft. Das Signal CRC_E wird in einer empfangenden Teilenehmerstation 10 nach dem vollständigen Empfang der HCRC ausgewertet.

Liegt kein Fehler vor, stehen am Ende des Kopfprüfsummen-Feldes HCRC alle Q-Ausgänge der CRC-FFs auf dem Wert '0'. In diesem Fall hat der Ausgang bzw. das Signal CRC_E den Wert '0'.

Wenn ein inverser Ausgang Q den Wert '0' hat, dann zeigt das Signal CRC_E den Wert '1' an, um die Kommunikationssteuereinrichtung 11 über den Fehler zu informieren.

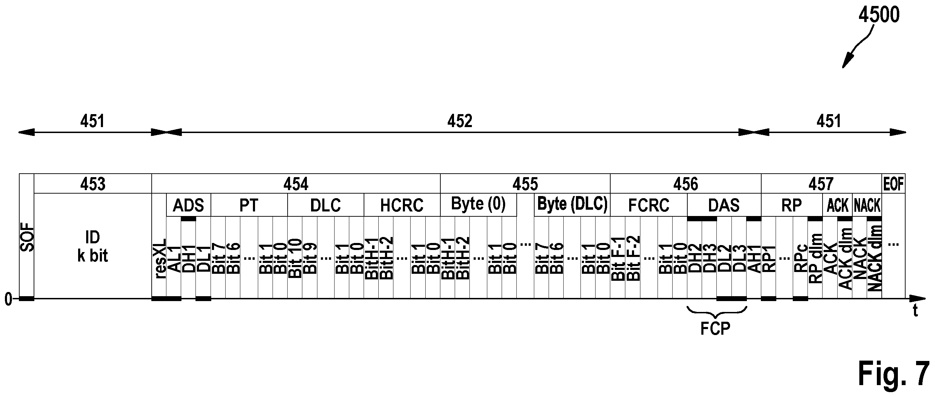

Fig. 7 zeigt einen Rahmen 4500 gemäß einem dritten Ausführungsbeispiel, bei welchem CAN XL und CAN FD nicht kompatibel sind. Bei diesem Ausführungsbeispiel unterscheiden sich der Rahmen 4500 und damit das CAN XL Rahmenformat von dem Rahmen 450 von Fig. 2, wie nachfolgend beschrieben. Hierbei sind nur die Unterschiede zu dem Rahmen 450 von Fig. 2 beschrieben. Im Übrigen sind die Rahmen 450, 4500 der beiden Ausführungsbeispiele gleich.

Allgemein wird bei der Erzeugung des Rahmens 4500 gemäß dem vorliegenden Ausführungsbeispiel nur die feste Stuffing-Regel verwendet, so dass nach einer festen Zahl von Bits ein fixed Stuff-Bit einzufügen ist. Alternativ können statt nur einem Stuff-Bit auch zwei oder mehr Bits als fixed Stuff-Bits eingefügt werden. Dies führt bei bekanntem Wert des Datenlängecodes (DLC) zu einer konstanten Rahmenlänge bzw. einer konstanten Länge des Rahmens 4500. Dies verhindert verschiedene Probleme, die durch dynamische Stuff-Bits hervorgerufen werden. Folglich ist auch kein SBC-Feld im Kopf des Rahmens 4500 notwendig.

In dem Rahmen 4500 gemäß dem vorliegenden Ausführungsbeispiel ist der Identifizierer (ID) nicht mehr auf eine Anzahl von 11 Bits oder 29 Bits wie bei CAN FD beschränkt. Die Anzahl k der Bits des Identifizierers (ID) kann frei gewählt werden. Die Anzahl k ist jedoch alternativ auf einen festen Wert festlegbar. Für eine hohe Nettodatenrate ist eine ID mit k = 8 Bits sinnvoll. Diese reicht aus, um jeder Teilnehmerstation 10, 20, 30 des Bussystems 1 ausreichend viele Bus-Zugriffs-Prioritäten zu geben. Selbstverständlich ist jedoch ein anderer Wer für k wählbar, je nach Bedarf und Anzahl von verschiedenen Prioritäten in dem Bussystem 1.

Die Bits RRS, IDE, FDF, XLF des Rahmens 450 von Fig. 2 sind bei dem Rahmen 4500 nicht mehr notwendig und werden weggelassen. Dies spart 4 Bits ein, so dass der Rahmenüberhang reduziert wird. Dadurch wird die Nettodatenrate im Bussystem 1 erhöht.

Das Endefeld (EOF) hat in dem Rahmen 4500 nur noch eine Anzahl von fünf Bits, wenn das NACK-Bit dominant ist. Ist das NACK-Bit dagegen rezessiv, hat das Endefeld (EOF) eine Anzahl von drei Bits. Dies sorgt dafür, dass am Ende des Rahmens 4500 eine Anzahl von sechs rezessiven Bits gesendet wird. Diese Zahl von rezessiven Bits kann in einem gültigen Rahmen 4500 an keiner anderen Stelle vorkommen, wenn in der Arbitrationsphase 451 nach fünf gleichen Bits ein fixed Stuff-Bit eingefügt wird. Es könnten alternativ mehr als sechs Bits sein. Insbesondere muss die Zahl der EOF Bits an die Zahl der Bits, nach denen ein fixed Stuff-Bit eingefügt wird, angepasst werden.

Der Zwischenrahmenabstand (IFS) benötigt in dem Rahmen 4500 keine Mindestlänge. Insbesondere kann der Zwischenrahmenabstand (IFS) die Länge 0 haben. In einem solchen Fall werden zwei Rahmen 4500 nahtlos nacheinander gesendet. Jedoch ist ein Zwischenrahmenabstand (IFS) mit einer Anzahl von beispielsweise 1 Bit auch sinnvoll, um die Robustheit des Bussystems 1 im Vergleich zu dem zuvor genannten Fall zu erhöhen. Durch die nun sieben rezessiven Bits zwischen zwei Rahmen 4500 kann sich eine neue Teilnehmerstation am Bus 40 zuverlässiger synchronisieren.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

**Patentansprüche**

1. Teilnehmerstation (10; 30) für ein serielles Bussystem (1), mit

   einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
   einer Sende-/Empfangseinrichtung (12; 32), die zum seriellen Senden eines von der Kommunikationssteuereinrichtung (11; 31) erzeugten Sendesignals (TXD) auf einen Bus (40) des Bussystems (1) ausgestaltet ist, und die zum seriellen Empfangen von Signalen von dem Bus (40) des Bussystems (1) ausgestaltet ist,
   wobei die Kommunikationssteuereinrichtung (11; 31) ausgestaltet ist, das Sendesignal (TXD) gemäß einem Rahmen (450) zu erzeugen und in dem Rahmen (450) eine Kopfprüfsumme (HCRC) einzufügen, in die nur Bits eines Rahmenkopfes einberechnet sind, der vor einem Datenfeld (455) angeordnet ist, das für Nutzdaten in dem Rahmen (450) vorgesehen ist,
   **dadurch gekennzeichnet, dass** die Kommunikationssteuereinrichtung (11; 31) ausgestaltet ist, in den Rahmenkopf dynamische Stuff-Bits derart einzufügen, dass nach 5 gleichen Bits in Folge ein inverses Stuff-Bit in den Bitstrom des Rahmens (450) eingefügt wird, und
   wobei die Kommunikationssteuereinrichtung (11; 31) ausgestaltet ist, für die Berechnung der Kopfprüfsumme (HCRC) einen vorbestimmten Startwert (R_S) und ein vorbestimmtes Prüfsummenpolynom (CRC_P) zu verwenden, mit welchen das Zwischenergebnis der Berechnung der Kopfprüfsumme (HCRC) für den Teil des Rahmenkopfes, in dem dynamische Stuff-Bits verwendet werden, ungleich einem Nullvektor ist.

2. Teilnehmerstation (10; 30) nach Anspruch 1, wobei der vorbestimmte Startwert (R_S) gleich (1,0,0,0,0,0,0,0,0,0,0,0,0) ist.

3. Teilnehmerstation (10; 30) nach Anspruch 1, wobei der vorbestimmte Startwert (R_S) gleich (0,0,1,1,0,0,0,0,0,0,0,0,0) ist.

4. Teilnehmerstation (10; 30) nach einem der vorangehenden Ansprüche, wobei die Kommunikationssteuereinrichtung (11; 31) ausgestaltet ist, für die Berechnung der Kopfprüfsumme (HCRC) mindestens ein Schaltelement (F0 bis F12) einer elektrischen Schaltung (1521) zu verwenden, das auf den vorbestimmten Startwert (R_S) einstellbar ist, und das oder die ein vorbestimmtes Prüfsummenpolynom (CRC_P) realisiert.

5. Teilnehmerstation (10; 30) nach einem der vorangehenden Ansprüche, wobei das vorbestimmte Prüfsummenpolynom (CRC_P) gleich $x^{13} + x^{12} + x^{11} + x^8 + x^7 + x^6 + x^5 + x^2 + x^1 + 1$ ist.

6. Teilnehmerstation (10; 30) nach einem der vorangehenden Ansprüche, wobei die Kommunikationssteuereinrichtung (11; 31) ausgestaltet ist, nur in einen ersten Teil des Rahmenkopfs dynamische Stuff-Bits einzufügen.

7. Teilnehmerstation (10; 30) nach einem der vorangehenden Ansprüche,

   wobei die Kommunikationssteuereinrichtung (11; 31) ausgestaltet ist, ein Feld (SBC) in den Rahmen (450) einzufügen, in dem die Anzahl der dynamischen Stuff-Bits codiert ist, und

wobei die Kommunikationssteuereinrichtung (11; 31) ausgestaltet ist, das mindestens eine Feld (SBC) vor dem Datenfeld (455) einzufügen, in dem die Nutzdaten des Rahmens (450) eingefügt sind.

8. Teilnehmerstation (10; 30) nach einem der vorangehenden Ansprüche, wobei die Sende-/Empfangseinrichtung (12; 32) zum seriellen Senden eines von der Kommunikationssteuereinrichtung (11; 31) erzeugten Sendesignals (TXD) auf einen Bus (40) des Bussystems (1) derart ausgestaltet ist, dass sich für eine Nachricht (45), die zwischen Teilnehmerstationen (10, 20, 30) des Bussystems (1) ausgetauscht wird, die Bitzeit (t_bt) eines in einer ersten Kommunikationsphase (451) auf den Bus (40) gesendeten Signals unterscheiden kann von einer Bitzeit (t_bt) eines in einer zweiten Kommunikationsphase (452) gesendeten Signals.

9. Teilnehmerstation (10; 30) nach einem der vorangehenden Ansprüche,

   wobei der für die Nachricht (45) gebildete Rahmen (450) kompatibel zu CAN FD aufgebaut ist, und
   wobei in einer ersten Kommunikationsphase (451) ausgehandelt wird, welche der Teilnehmerstationen (10, 20, 30) des Bussystems (1) in einer nachfolgenden zweiten Kommunikationsphase (452) einen zumindest zeitweise exklusiven, kollisionsfreien Zugriff auf den Bus (40) bekommt.

10. Bussystem (1), mit

    einem Bus (40), und
    mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach einem der vorangehenden Ansprüche ist.

11. Verfahren zur Kommunikation in einem seriellen Bussystem (1), wobei das Verfahren mit einer Teilnehmerstation (10; 30) des Bussystems (1) ausgeführt wird, die eine Kommunikationssteuereinrichtung (11; 31) und eine Sende-/Empfangseinrichtung (12; 32) aufweist, wobei das Verfahren die Schritte aufweist,

    Steuern, mit der Kommunikationssteuereinrichtung (11; 31) einer Kommunikation der Teilnehmerstation (10; 30) mit mindestens einer anderen Teilnehmerstation (10; 20; 30) des Bussystems (1), und
    Senden, mit der Sende-/Empfangseinrichtung (12; 32), eines von der Kommunikationssteuereinrichtung (11; 31) erzeugten Sendesignals (TXD) auf einen Bus (40) des Bussystems (1), wobei die Sende-/Empfangseinrichtung (12; 32) zudem zum seriellen Empfangen von Signalen von dem Bus (40) des Bussystems (1) ausgestaltet ist,
    Erzeugen, mit der Kommunikationssteuereinrichtung (11; 31), des Sendesignals (TXD) gemäß einem Rahmen (450),
    wobei die Kommunikationssteuereinrichtung (11; 31) in dem Rahmen (450) eine Kopfprüfsumme (HCRC) einfügt, in die nur Bits eines Rahmenkopfes einberechnet sind, der vor einem Datenfeld (455) angeordnet ist, das für Nutzdaten in dem Rahmen (450) vorgesehen ist,
    **dadurch gekennzeichnet, dass** die Kommunikationssteuereinrichtung (11; 31) in den Rahmenkopf dynamische Stuff-Bits derart einfügt, dass nach 5 gleichen Bits in Folge ein inverses Stuff-Bit in den Bitstrom des Rahmens (450) eingefügt wird, und
    wobei die Kommunikationssteuereinrichtung (11; 31) für die Berechnung der Kopfprüfsumme (HCRC) einen vorbestimmten Startwert (R_S) und ein vorbestimmtes Prüfsummenpolynom (CRC_P) verwendet, mit welchen das Zwischenergebnis der Berechnung der Kopfprüfsumme (HCRC) für den Teil des Rahmenkopfes, in dem dynamische Stuff-Bits verwendet werden, ungleich einem Nullvektor ist.

**Claims**

1. Subscriber station (10; 30) for a serial bus system (1), having

   a communication control device (11; 31) for controlling communication between the subscriber station (10; 30) and at least one other subscriber station (10; 20; 30) of the bus system (1), and
   a transceiver (12; 32) which is configured for the serial transmission of a transmission signal (TXD) generated by the communication control device (11; 31) to a bus (40) of the bus system (1), and which is configured for the serial reception of signals from the bus (40) of the bus system (1),
   wherein the communication control device (11; 31) is configured to generate the transmission signal (TXD) according to a frame (450) and to insert in the frame (450) a header cyclic redundancy check (HCRC) in which only bits of a frame header which is arranged in front of a data field (455) which is provided for payload data in the frame (450) are included,

**characterized in that** the communication control device (11; 31) is configured to insert dynamic stuff bits into the frame header in such a way that after 5 identical bits in succession an inverse stuff bit is inserted into the bit stream of the frame (450), and

wherein the communication control device (11; 31) is configured to use, for the calculation of the header cyclic redundancy check (HCRC), a predetermined start value (R_S) and a predetermined cyclic redundancy check polynomial (CRC_P) with which the intermediate result of the calculation of the header cyclic redundancy check (HCRC) for that part of the frame header in which dynamic stuff bits are used is not equal to a zero vector.

2. Subscriber station (10; 30) according to Claim 1, wherein the predetermined start value (R_S) is equal to (1, 0, 0, 0, 0, 0, 0, 0, 0, 0, 0, 0, 0) .

3. Subscriber station (10; 30) according to Claim 1, wherein the predetermined start value (R_S) is equal to (0, 0, 1, 1, 0, 0, 0, 0, 0, 0, 0, 0, 0) .

4. Subscriber station (10; 30) according to one of the preceding claims, wherein the communication control device (11; 31) is configured to use, for the calculation of the header cyclic redundancy check (HCRC), at least one switching element (F0 to F12), which is able to be set to the predetermined start value (R_S), of an electrical circuit (1521), which switching element or elements realize(s) a predetermined cyclic redundancy check polynomial (CRC_P).

5. Subscriber station (10; 30) according to one of the preceding claims, wherein the predetermined cyclic redundancy check polynomial (CRC_P) is equal to $x^{13} + x^{12} + x^{11} + x^8 + x^7 + x^6 + x^5 + x^2 + x^1 + 1$.

6. Subscriber station (10; 30) according to one of the preceding claims, wherein the communication control device (11; 31) is configured to insert dynamic stuff bits only into a first part of the frame header.

7. Subscriber station (10; 30) according to one of the preceding claims,

   wherein the communication control device (11; 31) is configured to insert into the frame (450) a field (SBC) in which the number of dynamic stuff bits is coded, and
   wherein the communication control device (11; 31) is configured to insert the at least one field (SBC) in front of the data field (455) in which the payload data of the frame (450) are inserted.

8. Subscriber station (10; 30) according to one of the preceding claims, wherein the transceiver (12; 32) for the serial transmission of a transmission signal (TXD) generated by the communication control device (11; 31) to a bus (40) of the bus system (1) is configured in such a way that, for a message (45) exchanged between subscriber stations (10, 20, 30) of the bus system (1), the bit time (t_bt) of a signal transmitted to the bus (40) in a first communication phase (451) can differ from a bit time (t_bt) of a signal transmitted in a second communication phase (452).

9. Subscriber station (10; 30) according to one of the preceding claims,

   wherein the frame (450) formed for the message (45) is of compatible design with CAN FD, and
   wherein a first communication phase (451) is used to negotiate which of the subscriber stations (10, 20, 30) of the bus system (1) receives at least temporarily exclusive, collision-free access to the bus (40) in a subsequent, second communication phase (452).

10. Bus system (1), having

   a bus (40), and
   at least two subscriber stations (10; 20; 30) which are connected to one another via the bus (40) in such a way that they can communicate serially with one another and at least one subscriber station (10; 30) of which is a subscriber station (10; 30) according to one of the preceding claims.

11. Method for communicating in a serial bus system (1), wherein the method is performed using a subscriber station (10; 30) of the bus system (1), which subscriber station has a communication control device (11; 31) and a transceiver (12; 32), wherein the method has the steps of

controlling, using the communication control device (11; 31), communication between the subscriber station (10; 30) and at least one other subscriber station (10; 20; 30) of the bus system (1), and

transmitting, using the transceiver (12; 32), a transmission signal (TXD) generated by the communication control device (11; 31) to a bus (40) of the bus system (1), wherein the transceiver (12; 32) is additionally configured for the serial reception of signals from the bus (40) of the bus system (1),

generating, using the communication control device (11; 31), the transmission signal (TXD) according to a frame (450),

wherein the communication control device (11; 31) inserts in the frame (450) a header cyclic redundancy check (HCRC) in which only bits of a frame header which is arranged in front of a data field (455) which is provided for payload data in the frame (450) are included,

**characterized in that** the communication control device (11; 31) inserts dynamic stuff bits into the frame header in such a way that after 5 identical bits in succession an inverse stuff bit is inserted into the bit stream of the frame (450), and

wherein the communication control device (11; 31) uses, for the calculation of the header cyclic redundancy check (HCRC), a predetermined start value (R_S) and a predetermined cyclic redundancy check polynomial (CRC_P) with which the intermediate result of the calculation of the header cyclic redundancy check (HCRC) for that part of the frame header in which dynamic stuff bits are used is not equal to a zero vector.

**Revendications**

1. Station d'abonné (10 ; 30) pour un système de bus série (1), comprenant

   un dispositif de commande de communication (11 ; 31) destiné à commander une communication de la station d'abonné (10 ; 30) avec au moins une autre station d'abonné (10 ; 20 ; 30) du système de bus (1), et
   un dispositif d'émission/réception (12 ; 32) qui est configuré pour l'envoi en série d'un signal d'émission (TXD) généré par le dispositif de commande de communication (11 ; 31) à un bus (40) du système de bus (1) et qui est configuré pour la réception en série de signaux du bus (40) du système de bus (1),
   le dispositif de commande de communication (11 ; 31) étant configuré pour générer le signal d'émission (TXD) conformément à une trame (450) et pour insérer dans la trame (450) une somme de contrôle d'en-tête (HCRC) dans laquelle sont inclus uniquement des bits d'un en-tête de trame, lequel est disposé avant un champ de données (455) qui est prévu pour des données, utiles dans la trame (450),
   **caractérisé en ce que** le dispositif de commande de communication (11 ; 31) est configuré pour insérer des bits de bourrage dynamiques dans l'en-tête de trame de telle sorte qu'un bit de bourrage inverse soit inséré dans le flux de bits de la trame (450) après 5 bits identiques successifs, et
   le dispositif de commande de communication (11 ; 31) étant configuré pour utiliser, pour le calcul de la somme de contrôle d'en-tête (HCRC), une valeur de départ (R_S) prédéterminée et un polynôme de somme de contrôle (CRC_P) prédéterminé, avec lesquels le résultat intermédiaire du calcul de la somme de contrôle d'en-tête (HCRC) est différent d'un vecteur zéro pour la partie de l'en-tête de trame dans laquelle sont utilisés des bits de bourrage dynamiques.

2. Station d'abonné (10 ; 30) selon la revendication 1, la valeur de départ (R_S) prédéterminée étant égale à (1,0,0,0,0,0,0,0,0,0,0,0,0) .

3. Station d'abonné (10 ; 30) selon la revendication 1, la valeur de départ (R_S) prédéterminée étant égale à (0, 0, 1, 1, 0, 0, 0, 0, 0, 0, 0, 0, 0) .

4. Station d'abonné (10 ; 30) selon l'une des revendications précédentes, le dispositif de commande de communication (11 ; 31) étant configuré pour utiliser, pour le calcul de la somme de contrôle d'en-tête (HCRC), au moins un élément de commutation (F0 à F12) d'un circuit électrique (1521), lequel est réglable à la valeur de départ (R_S) prédéterminée, et qui réalise(nt) un polynôme de somme de contrôle (CRC_P) prédéterminé.

5. Station d'abonné (10 ; 30) selon l'une des revendications précédentes, le polynôme de somme de contrôle (CRC_P) prédéterminé étant égal à $x^{13} + x^{12} + x^{11} + x^8 + x^7 + x^6 + x^5 + x^2 + x^1 + 1$.

6. Station d'abonné (10 ; 30) selon l'une des revendications précédentes, le dispositif de commande de communication (11 ; 31) étant configuré pour insérer des bits de bourrage dynamiques uniquement dans une première partie de l'en-tête de trame.

**7.** Station d'abonné (10 ; 30) selon l'une des revendications précédentes,

le dispositif de commande de communication (11 ; 31) étant configuré pour insérer dans la trame (450) un champ (SBC) dans lequel est codé le nombre de bits de bourrage dynamiques, et le dispositif de commande de communication (11 ; 31) étant configuré pour insérer l'au moins un champ (SBC) avant le champ de données (455) dans lequel sont insérées les données utiles de la trame (450).

**8.** Station d'abonné (10 ; 30) selon l'une des revendications précédentes, le dispositif d'émission/réception (12 ; 32) destiné à l'envoi en série à un bus (40) du système de bus (1) d'un signal d'émission (TXD) généré par le dispositif de commande de communication (11 ; 31) étant configuré de telle sorte que pour un message (45) qui est échangé entre les stations d'abonné (10, 20, 30) du système de bus (1), le temps de bit (t_bt) d'un signal envoyé au bus (40) dans une première phase de communication (451) peut être différent d'un temps de bit (t_bt) d'un signal émis dans une deuxième phase de communication (452).

**9.** Station d'abonné (10 ; 30) selon l'une des revendications précédentes,

la trame (450) formée pour le message (45) étant construite de manière compatible avec CAN FD, et celle des stations d'abonné (10, 20, 30) du système de bus (1) qui obtient, dans une deuxième phase de communication (452) qui suit, un accès au bus (40) au moins temporairement exclusif, sans collision, étant négociée dans une première phase de communication (451).

**10.** Système de bus (1), comprenant

un bus (40), et au moins deux stations d'abonné (10 ; 20 ; 30), lesquelles sont reliées l'une à l'autre par le biais du bus (40), de telle sorte qu'elles peuvent communiquer en série entre elles et parmi lesquelles au moins une station d'abonné (10 ; 30) est une station d'abonné (10 ; 30) selon l'une des revendications précédentes.

**11.** Procédé de communication dans un système de bus série (1), le procédé étant mis en œuvre avec une station d'abonné (10 ; 30) du système de bus (1) qui comprend un dispositif de commande de communication (11 ; 31) et un dispositif d'émission/réception (12 ; 32), le procédé comprenant les étapes suivantes :

commande, avec le dispositif de commande de communication (11 ; 31), d'une communication de la station d'abonné (10 ; 30) avec au moins une autre station d'abonné (10 ; 20 ; 30) du système de bus (1), et envoi, avec le dispositif d'émission/réception (12 ; 32), d'un signal d'émission (TXD) généré par le dispositif de commande de communication (11 ; 31) à un bus (40) du système de bus (1), le dispositif d'émission/réception (12 ; 32) étant en plus configuré pour la réception en série de signaux du bus (40) du système de bus (1), génération, avec le dispositif de commande de communication (11 ; 31), du signal d'émission (TXD) conformément à une trame (450), le dispositif de commande de communication (11 ; 31) insérant dans la trame (450) une somme de contrôle d'en-tête (HCRC) dans laquelle sont inclus uniquement des bits d'un en-tête de trame, lequel est disposé avant un champ de données (455) qui est prévu pour des données utiles dans la trame (450), **caractérisé en ce que** le dispositif de commande de communication (11; 31) insère des bits de bourrage dynamiques dans l'en-tête de trame de telle sorte qu'un bit de bourrage inverse soit inséré dans le flux de bits de la trame (450) après 5 bits identiques successifs, et le dispositif de commande de communication (11 ; 31) utilisant, pour le calcul de la somme de contrôle d'en-tête (HCRC), une valeur de départ (R_S) prédéterminée et un polynôme de somme de contrôle (CRC_P) prédéterminé, avec lesquels le résultat intermédiaire du calcul de la somme de contrôle d'en-tête (HCRC) est différent d'un vecteur zéro pour la partie de l'en-tête de trame dans laquelle sont utilisés des bits de bourrage dynamiques.

Fig. 1

EP 4 070 511 B1

450

| 451 | 452 | 451 |

| 453 | 454 | 455 | 456 | 457 | EOF |

ID

SOF | ID 10 | ID 9 | ID 8 | ID 7 | ID 6 | ID 5 | ID 4 | ID 3 | ID 2 | ID 1 | ID 0 | RRS | IDE | FDF | XLF

resXL | AL1 | DH1 | DL1

ADS | PT | DLC | SBC | HCRC

Bit 7 | Bit 6 | ... | Bit 1 | Bit 0 | Bit 10 | Bit 9 | ... | Bit 1 | Bit 0 | Bit 2 | Bit 1 | Bit 0 | Bit 12 | Bit 11 | ... | Bit 1 | Bit 0

Byte (0) | Byte (DLC)

BitH-1 | BitH-2 | Bit 1 | Bit 0 | ... | Bit 7 | Bit 6 | Bit 1 | Bit 0

FCRC | DAS

Bit F-1 | Bit F-2 | Bit 1 | Bit 0 | DH2 | DH3 | DL2 | DL3 | AH1 | RP1

FCP

RP | ACK | NACK

RPc | RP dlm | ACK | ACK dlm | NACK | NACK dlm | ...

t

Fig. 2

**Fig. 3**

**Fig. 4**

**Fig. 5**

Fig. 6

Fig. 7

EP 4 070 511 B1

**IN DER BESCHREIBUNG AUFGEFÜHRTE DOKUMENTE**

**In der Beschreibung aufgeführte Patentdokumente**

- WO 2019030214 A